# EUROPÄISCHE PATENTSCHRIFT

(11) **EP 2 707 685 B1**
(45) Veröffentlichungstag und Bekanntmachung des Hinweises auf die Patenterteilung: **04.07.2018**
(21) Anmeldenummer: 12726350.7
(22) Anmeldetag: 10.05.2012
(51) Int. Cl.: G01L 5/22, B62D 6/10, G01D 5/347, G01D 5/244, B29C 65/08, F16B 17/00, B29C 65/64

(54) **SENSORANORDNUNG FÜR EINE DREHBARE WELLE**
SENSOR ARRANGEMENT FOR A ROTATABLE SHAFT
ENSEMBLE DÉTECTEUR POUR UN ARBRE ROTATIF

(30) Priorität: 13.05.2011 DE 102011101482
(43) Veröffentlichungstag der Anmeldung: 19.03.2014
(73) Patentinhaber: ThyssenKrupp Presta AG, 9492 Eschen (LI)
(72) Erfinder: KNOLL, Peter, 88131 Lindau (DE); SCHWARZHANS, Paul, A-6800 Feldkirch (AT); SCHERER, Oliver, A-6710 Nenzig (AT); EDELMANN, Gunther, CH-9470 Buchs (CH)
(74) Vertreter: Lenzing Gerber Stute
(86) Internationale Anmeldenummer: PCT/EP2012/002018
(87) Internationale Veröffentlichungsnummer: WO 2012/156053

(56) Entgegenhaltungen:
- WO-A1-2009/090018
- DE-A1-102006 057 022
- DE-A1-102007 032 907

## Beschreibung

Die vorliegende Erfindung betrifft eine Sensoranordnung für eine drehbare Welle sowie ein Verfahren zur Herstellung einer Sensoranordnung durch Montage eines Gebers an einer solchen Welle.

Es gibt zahlreiche Anwendungen für Sensor-Anordnungen, die an drehbaren Wellen angeordnet werden. Beispiele hierfür sind bei Kraftfahrzeuglenkungen Sensoren zur Bestimmung des an der Lenkwelle anliegenden Drehmoments, das im allgemeinen dem Drehmoment entspricht, welches der Fahrer auf das Lenkrad ausübt und zur Messung des Drehwinkels der Lenkung, der zur Bestimmung der beabsichtigten oder tatsächlichen Fahrtrichtung des Fahrzeugs erforderlich ist. Bei beiden Sensoren ist es gerade im Kraftfahrzeugbereich erwünscht, die Messgröße mit möglichst geringem Fehler zu bestimmen. Die Sensoren sind üblicherweise so aufgebaut, dass ein Geber auf der Welle montiert ist und sich mit der Welle dreht, während ein zur Abtastung des Gebers geeigneter Sensor gegenüber dem Geber montiert ist und dessen relativ Drehung zu dem Sensor abtastet. Der Sensor kann dabei karosseriefest angeordnet sein, wenn der Drehwinkel einer Lenkwelle gemessen werden soll. Der Sensor kann auch auf einem zweiten Wellenteil befestigt werden, wenn der Relativwinkel zwischen zwei Wellenteilen gemessen werden soll, wie dies bei Drehmomentsensoren auf Basis eines Drehstabs üblich ist.

Die Geber sind im allgemeinen ringförmig ausgebildet und tragen eine Kodierung, die von dem Sensor abgetastet werden kann. Eine besonders hohe Genauigkeit der Sensoranordnung wird in einem solchen Fall nur dann erzielt, wenn der Geber zur aktuellen Position der Welle im Einbauzustand und der Sensor präzise koaxial zueinander justiert sind. Hierzu ist es erforderlich, den Geber mit hoher Genauigkeit auch koaxial auf der Welle anzuordnen, mit der der Geber sich im Betrieb dreht. Ebenso ist eine Verbindungstechnik erforderlich, die die Ausrichtung des Gebers auf der Welle während des Verbindungsvorgangs und später im Betrieb unverändert belässt.

Im Stand der Technik wird in der DE 10 2008 011467 A1 eine Verbindung des Gebers mit der Welle durch eine Presspassung eines hülsenförmigen Teils des Gebers auf der Welle vorgeschlagen. Dazu kann eine Sicke in einer umlaufenden Nut auf der Welle verstemmt werden, um einen entsprechenden Formschluss darzustellen. Ein Nachteil dieser Lösung besteht darin, dass bei dem Montageprozess Eigenspannungen in der Hülse entstehen, die zu Verformungen des Gebers führen können und damit das Messsignal verfälschen können.

In der DE 10 2006 057 022 A1 wird vorgeschlagen, das Hülsenteil des Gebers mit einer Prägeoperation in eine negative Kontur der Welle einzuformen und damit die Fixierung darzustellen. Auch hier besteht das Problem, dass bei dem Prägevorgang die Hülse verformt wird und diese Verformung negative Auswirkungen auf den Geber haben kann.

Im Dokument DE 10 2007 032 907 A1 wird beschrieben, dass eine Kunststoffhülse auf einen Verzahnungsabschnitt einer Welle aufgebracht wird. Dabei wird die Hülse zunächst auf die erhitzte Welle aufgesetzt, dort erhitzt sich der verformbare Kunststoff und wird auf der Innenseite der Hülse plastifiziert. Danach kann die erweichte Hülse weiter auf die Verzahnung geschoben werden.

Die DE 102 28 312 A1 beschreibt die Verbindung zweier Werkstücke, wobei ein Werkstück zumindest teilweise aus Kunststoff besteht. Der Kunststoff wird in einem ersten Arbeitsschritt erwärmt und dann in einem zweiten Schritt gegen das andere Werkstück gepresst. In dem Kontaktbereich entsteht eine Verformung des Kunststoffs, wodurch die beiden Werkstücke unbeweglich miteinander verbunden werden.

Die DE 10 2008 047 466 A1 schlägt die Montage einer Magnetbaugruppe mit einem Magnetring mittels einer Trägerhülse auf einer Welle vor. Die Trägerhülse wird dabei formschlüssig oder stoffschlüssig mit dem Magnetring verbunden. Die Verbindung der Trägerhülse mit der Welle erfolgt jedoch über eine Spielpassung. Diese Spielpassung führt dazu, dass die Verbindung nicht dauerhaltbar ist.

Es ist deshalb Aufgabe der vorliegenden Erfindung, eine technische Lösung für eine dauerhaltbare Verbindung eines Geberelements mit einer Welle vorzuschlagen, die es ermöglicht, das Geberelement gezielt in einer bestimmten Position anzubringen und Verformungen oder Verlagerungen des Geberelements bei der Befestigung auszuschließen.

Diese Aufgabe wird von einer Vorrichtung mit den Merkmalen des Anspruchs 1 und mit einem Verfahren mit den Merkmalen des Anspruchs 8 gelöst.

Der Sensor umfasst ein insgesamt als Geber bezeichnetes Bauteil, das drehfest auf einer Welle montiert ist. Der Geber selbst weist ein Geberelement auf, das mit einer für ein zugeordnetes Sensorelement lesbaren Kodierung versehen ist und das von einer Trägerhülse getragen ist. Die Trägerhülse ist aus einem thermoplastischen Kunststoff gefertigt und weist zur Montage an der Welle einen durch eine Ultraschall-Sonotrode verformten Bereich auf, der in eine Ausnehmung der Welle eingeformt ist, wobei der verformte Bereich durch Wärme und Druck verformt ist. Dadurch kann die Trägerhülse ohne eine erhebliche Erwärmung der Welle mittels Ultraschallformung zur Montage so umgeformt werden, dass sie an einem Befestigungsbereich der Welle in Axialrichtung und in Umfangsrichtung dauerhaft und spielfrei befestigt ist.

Die Trägerhülse weist vorzugsweise eine Innenkontur auf, mit der sie an wenigstens drei über dem Umfang verteilten Stellen, sogenannte Kontaktbereiche, an der Welle anliegt. Die Innenkontur ist vorzugsweise aus drei achsparallel verlaufenden Stegen gebildet, die in einem Winkelabstand von etwa 120 ° voneinander über den inneren Umfang der Trägerhülse verteilt sind. Die Stege liegen, wenn die Trägerhülse auf die Welle aufgesetzt ist, vorzugsweise mit Vorspannung an der äußeren Oberfläche der Hülse an.

Mit Vorzug ist die Trägerhülse in einem zusätzlichen Formbereich, der zwischen denen über den Umfang verteilten Kontaktbereichen, an denen die Trägerhülse an der Welle anliegt, mittels Ultraschalleinformung in eine Ausnehmung der Welle eingeformt.

Mit Vorzug ist die Welle zylindrisch ausgebildet und die Kontaktbereiche liegen an der glatten zylindrischen Außenoberfläche der Welle an.

Die Trägerhülse weist vorzugsweise eine Befestigungsstelle auf, die für die Umformung mittels Ultraschall-Sonotrode vorbereitet ist. Diese Befestigungsstelle liegt vorzugsweise zwischen zwei Stegen der Innenkontur.

Das Geberelement weist vorzugsweise die geometrische Form einer Scheibe mit einem innen liegenden Ringbund auf. Das Geberelement kann aus Metall gefertigt sein und optisch oder magnetisch kodiert sein. Im Bereich des inneren Umfangs des Geberelements kann ein Befestigungsbereich vorgesehen sein, mit dem das Geberelement an der Hülse dauerhaft befestigt ist.

Die Aufgabe wird auch durch ein Verfahren zur Herstellung einer Sensoranordnung mit einem drehfest auf einer um eine Längsachse drehbaren Welle befestigten Geber gelöst, wobei der Geber ein Geberelement aufweist, das mit einer für ein zugeordnetes Sensorelement lesbaren Kodierung versehen ist und das von einer Trägerhülse getragen ist, wobei folgende Schritte ausgeführt werden:
- Bereitstellen der Trägerhülse aus einem thermoplastischen Kunststoff,
- Positionieren der Trägerhülse auf der Welle derart, dass ein umformbarer Bereich radial und axial einer Ausnehmung der Welle benachbart ist,
- Umformen der Trägerhülse durch eine Ultraschall-Sonotrode, die den Bereich gleichzeitig durch Ultraschall erhitzt und das Material der Trägerhülse in die Ausnehmung der Welle eindrückt.

Das Material wird dabei durch Erwärmung plastisch verformbar, so dass die mechanische Belastung der Trägerhülse insgesamt gering bleibt und eine Verlagerung der im zweiten Verfahrensschritt positionierten Trägerhülse ausgeschlossen ist. Dabei wird besonders einfach die Sonotrode auch als Druck ausübendes Element in dem Umformvorgang eingesetzt. Dies gilt insbesondere, wenn die Sonotrode eine Ultraschallfrequenz zur Erweichung des Materials aufweist und gegen die Trägerhülse gedrückt wird. Vorzugsweise kann das thermoplastische Material nach dem Abschalten der Sonotrode aushärten.

Schließlich wird die Aufgabe gelöst durch Verwendung einer Ultraschall-Sonotrode zur Fertigung einer Sensoranordnung mit einem drehfest auf einer um eine Längsachse drehbaren Welle befestigten Geber, wobei der Geber ein Geberelement aufweist, das mit einer für ein zugeordnetes Sensorelement lesbaren Kodierung versehen ist und das von einer Trägerhülse getragen ist, wobei die Trägerhülse aus einem thermoplastischen Kunststoff gefertigt ist und in einem Bereich zur Montage an der Welle mittels Ultraschallumformung durch die Sonotrode in eine Ausnehmung der Welle eingeformt wird, wobei die Ausnehmung in Axialrichtung und in Umfangsrichtung der Welle begrenzt ist. Bei der Positionierung kann die Trägerhülse mit dem verformbaren Bereich entweder unmittelbar über der Ausnehmung der Welle liegen, oder der Bereich liegt nicht direkt auf der Oberfläche der Welle auf, sondern befindet sich in einem Abstand von der Welle oberhalb der Ausnehmung, wie dies in einem bevorzugten Ausführungsbeispiel weiter unten beschrieben und in der Zeichnung dargestellt ist.

Nachfolgend wird ein Ausführungsbeispiel der vorliegenden Erfindung anhand der Zeichnung näher beschrieben. Es zeigen:
- Figur 1:: eine Sensoranordnung mit einem Geber und einem nur schematisch dargestellten Sensor in einem Längsschnitt vor der festen Montage des Gebers;
- Figur 2:: die Sensoranordnung während der Befestigung des Gebers auf der Welle in einer Ansicht entsprechend Figur 1;
- Figur 3:: die Sensoranordnung aus Figur 1 in einem Querschnitt entlang der Linie III - III; sowie
- Figur 4:: die Sensoranordnung aus Figur 2 in einem Querschnitt entlang der Linie IV - IV.

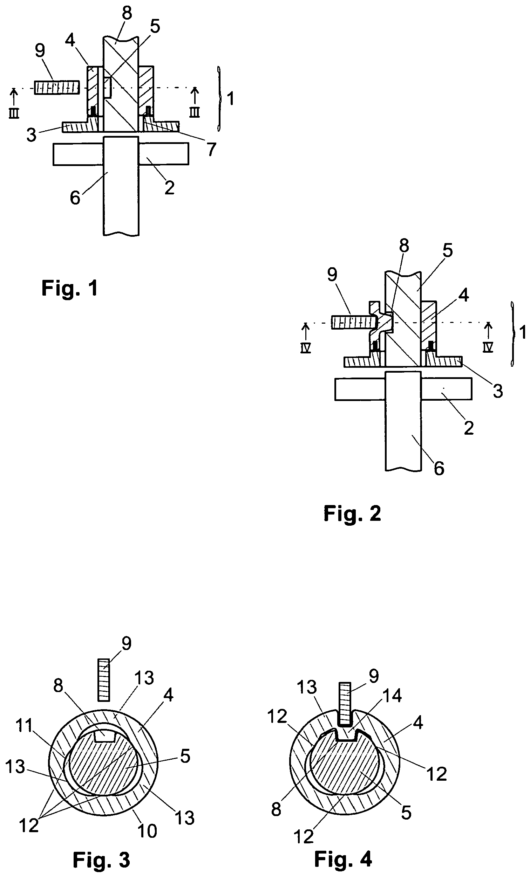

In der Figur 1 ist eine Sensoranordnung mit einem insgesamt mit der Ziffer 1 bezeichneten Geber und einer Sensorkomponente 2, beispielsweise einen Magnetring, dargestellt. Der Geber 1 umfasst ein Geberelement 3 und eine Trägerhülse 4 und ist im wesentlichen rotationssymmetrisch zu einer Mittenachse, die in Figur 1 in der Zeichenebene liegt. Die Trägerhülse 4 ist auf eine Welle 5 aufgesetzt. Ein nicht dargestellter Sensor soll im Betrieb den Drehwinkel der Welle 5 gegenüber einem Bezugselement 6 messen, beispielsweise einem weiteren Wellenstumpf. Hierzu wird der durch den Sensor abgetastete Wert entsprechend der relativen Drehlage zwischen dem Geber 1 und der Sensorkomponente 2, im Beispiel dem Magnetring, moduliert und damit die relative Drehlage der Wellen 5 gegenüber dem Bezugselement 6 für den Sensor messbar.

Das Geberelement 3 ist als Kreisring ausgebildet und ist aus Metall hergestellt. Es trägt eine Kodierung, die von der Sensorkomponente 2 moduliert werden kann. Das Geberelement 3 weist an seinem inneren Umfang einen flanschartigen Anschlussbereich 7 auf, mit dem es in Axialrichtung der Anordnung an der Stirnseite der Trägerhülse 4 spielfrei und dauerhaft befestigt ist.

Die Welle 5 weist eine Ausnehmung 8 auf, die in Axialrichtung und in Umfangsrichtung der Welle 5 begrenzt ist. Die Ausnehmung 8 ist von der Oberfläche her in die Welle 5 eingebracht, beispielsweise in Form einer Sackbohrung. Die Ausnehmung 8 ist so positioniert, dass sie bei montiertem Geber 1 von der Trägerhülse 4 überdeckt wird.

Die Trägerhülse 4 ist aus einem mit Ultraschall umformbaren Kunststoff gefertigt. Nur schematisch ist gegenüber der Ausnehmung 8 eine Sonotrode 9 dargestellt, die zur Umformung der Trägerhülse 4 verwendet wird.

Die Trägerhülse 4 sitzt in der Darstellung der Figur 1 auf der Welle 5 und trägt das Geberelement 3. Die Trägerhülse ist in dieser Darstellung jedoch noch nicht endgültig fixiert. Sie sitzt vielmehr reibschlüssig auf der Welle 5 und kann noch in Axialrichtung und in Umfangsrichtung ausgerichtet werden. Den Befestigungsvorgang, mit dem der Geber 1 dauerhaft und spielfrei auf der Welle 5 befestigt wird, veranschaulicht die Figur 2.

Zur Befestigung der Trägerhülse 4 und damit des gesamten Gebers 1 auf der Welle 5 wird die Sonotrode 9 aktiviert, beispielsweise mit einer Ultraschallfrequenz im üblichen Bereich von 20 kHz oder mehr. Die Sonotrode 9 wird dann in einer Radialrichtung der Trägerhülse 4 auf die Oberfläche der Trägerhülse 4 aufgesetzt und zwar genau dort, wo die Welle 5 ihre Ausnehmung 8 aufweist. Durch weiteren Druck formt die Sonotrode 9 den der Ausnehmung 8 unmittelbar gegenüber liegenden Bereich der Trägerhülse 4 um und presst diesen in die Ausnehmung 8 ein. Der Druck beziehungsweise die Kraft, die mit der Sonotrode 9 auf die Trägerhülse 4 ausgeübt werden muss, ist relativ gering, da durch Ultraschalleinwirkung das Material der Trägerhülse 4 lokal im Bereich der Ausnehmung 8 thermoplastisch erweicht und deshalb leicht verformbar wird. Nach Abschalten der Anregungsfrequenz der Sonotrode 9 erstarrt das zuvor erweichte Material wieder durch Abkühlung und wird deshalb dauerhaft in der Ausnehmung 8 verbleiben.

Die Ultraschallerweichung der Trägerhülse 4 führt dazu, dass die Trägerhülse 4 selbst für ihre Maßhaltigkeit nur unwesentlichen Belastungen unterliegt und insbesondere keine Verspannung der Trägerhülse 4 bewirkt wird. Das an der Trägerhülse 4 befestigte Geberelement 3 wird deshalb gegenüber der Figur 1 nicht aus der gewählten Position verlagert, so dass die für die Messgenauigkeit wesentliche Relation zwischen dem Geberelement 3 und der Sensorkomponente 2 erhalten bleibt. Diese Relation wird durch die Umformung der Trägerhülse im Bereich der Ausnehmung 8 dauerhaft gesichert.

Die Figur 3 zeigt einen Querschnitt entlang der Linie III - III aus Figur 1. Die Trägerhülse 4 ist an ihrem äußeren Umfang 10 zylindrisch ausgebildet. Die Welle 5 weist ebenfalls einen im wesentlichen kreisrunden Querschnitt auf, der nur durch die Ausnehmung 8 lokal unterbrochen ist. Die Trägerhülse 4 weist weiter eine innere Umfangsfläche 11 auf, die nicht kreisrund ist, sondern drei Stege 12 aufweist. Die Stege 12 sind an der inneren Umfangsfläche 11 der Trägerhülse 4 etwa in einem Winkelabstand von 120 ° verteilt. Die Stege 12 verlaufen vorzugsweise parallel zu der Längsachse der Trägerhülse 4. Zwischen den Stegen 12 weist die Trägerhülse 4 Bereiche 13 auf, in denen die Wandstärke reduziert ist. Die Querschnittsform der Trägerhülse 4 erlaubt es deshalb, dass die Trägerhülse 4 mit den drei Stegen 12 unter leichter Vorspannung auf der äußeren Oberfläche der Welle 5 sitzt. Die drei Stege 12 gewährleisten eine präzise Positionierung der Trägerhülse 4 in Bezug auf die Längsachse der Welle 5. Durch die drei Kontaktstellen ist diese Position genau definiert.

Die Sonotrode 9 ist während des Fügevorgangs gegenüber der Ausnehmung 8 angeordnet. In der Figur 3 ist die Trägerhülse 4 noch nicht verformt. Entsprechend der Beschreibung zu Figur 1 kann in dieser Situation die Trägerhülse 4 noch bezüglich der Welle 5 justiert werden. Es ist ersichtlich, dass die Sonotrode 9 einem Bereich 13 gegenüber liegt, der sich zwischen zwei Stegen 12 befindet.

Die Figur 4 veranschaulicht nun die Befestigung der Trägerhülse 4 auf der Welle 5 durch Ultraschallumformung. Figur 4 zeigt dazu einen Querschnitt entlang der Linie IV - IV aus Figur 2. Die Sonotrode 9 wird in dem Bereich 13 aufgesetzt und mit der gewählten Ultraschallfrequenz beaufschlagt. Bei dem Kontakt mit der Trägerhülse 4 entsteht dort aufgrund der inneren Reibung in dem Kunststoffmaterial Wärme, die das Material der Trägerhülse 4 plastisch verformbar macht und es ermöglicht, das Material bei der Ziffer 14 in die Ausnehmung 8 zu drücken. Nach Abschalten der elektrischen Leistung und Entfernen der Sonotrode 9 ist die Trägerhülse 4 spielfrei und dauerhaft mit der Welle 5 verbunden. Verspannungen der Trägerhülse 4 während und nach dem Fügevorgang treten bei geeigneter Ausführung des Prozesses nicht auf. Die Ausrichtung des Gebers 1 gegenüber der Sensorkomponente 2 bleibt durch den Fügevorgang unbeeinträchtigt.

Die Trägerhülse 4 ist also aus einem thermoplastischen Kunststoff gefertigt ist und weist einen Bereich 13 zur Montage an der Welle 5 mit einem durch eine Ultraschall-Sonotrode verformten Bereich auf, der in eine Ausnehmung 8 der Welle 5 eingeformt ist, wobei der verformte Bereich in besonders einfacher und dauerhaltbarer Weise durch Einwirkung der Ultraschall-Sonotrode 9 durch Wärme und Druck verformt ist.

Die beschriebene Sensoranordnung und das beschriebene Verfahren sind besonders geeignet für Drehwinkelsensoren und Drehmomentsensoren in elektronisch gesteuerten Servolenkungen für Kraftfahrzeuge.

### Bezugsziffern

- 1.: Geber
- 2.: Sensorkomponente
- 3.: Geberelement
- 4.: Trägerhülse
- 5.: Welle
- 6.: Bezugselement
- 7.: Anschlussbereich
- 8.: Ausnehmung
- 9.: Sonotrode
- 10.: Umfang
- 11.: Umfangsfläche
- 12.: Stege
- 13.: Bereiche

## Patentansprüche

1. Sensoranordnung mit einem drehfest auf einer um eine Längsachse drehbaren Welle (5) befestigten Geber (1), wobei der Geber (1) ein Geberelement (3) aufweist, das mit einer für ein zugeordnetes Sensorelement lesbaren Kodierung versehen ist und das von einer Trägerhülse (4) getragen ist,
**dadurch gekennzeichnet, dass** die Trägerhülse (4) aus einem thermoplastischen Kunststoff gefertigt ist und dass ein Bereich (13) zur Montage an der Welle (5) einen durch eine Ultraschall-Sonotrode verformten Bereich aufweist und in eine Ausnehmung (8) der Welle (5) eingeformt ist, wobei die Ausnehmung (8) in Axialrichtung und in Umfangsrichtung der Welle (5) begrenzt ist und der verformte Bereich durch Wärme und Druck verformt ist.

2. Sensoranordnung nach Anspruch 1, **dadurch gekennzeichnet, dass** die Trägerhülse (4) eine Innenkontur mit wenigstens drei über dem Umfang verteilten Stegen (12) aufweist, die an der Welle (5) anliegen.

3. Sensoranordnung nach Anspruch 2, **dadurch gekennzeichnet, dass** die Innenkontur aus drei zu der Längsachse der Welle (5) parallel verlaufenden Stegen gebildet ist, die in einem Winkelabstand über den inneren Umfang (11) der Trägerhülse (4) verteilt sind.

4. Sensoranordnung nach Anspruch 2 oder 3,
**dadurch gekennzeichnet, dass** die Stege (12) mit Vorspannung an der äußeren Oberfläche der Trägerhülse (4) anliegen.

5. Sensoranordnung nach einem der vorhergehenden Ansprüche, **dadurch gekennzeichnet, dass** die Trägerhülse (4) eine Befestigungsstelle (13) aufweist, die für die Umformung mittels einer Ultraschall-Sonotrode (9) vorbereitet ist.

6. Sensoranordnung nach Anspruch 5, **dadurch gekennzeichnet, dass** die Befestigungsstelle (13) zwischen zwei Stegen (12) der Innenkontur angeordnet ist.

7. Sensoranordnung nach einem der vorhergehenden Ansprüche, **dadurch gekennzeichnet, dass** das Geberelement (3) die geometrische Form einer Scheibe mit einem innen liegenden Ringbund (7) aufweist.

8. Verfahren zur Herstellung einer Sensoranordnung mit einem drehfest auf einer um eine Längsachse drehbaren Welle (5) befestigten Geber (1), wobei der Geber (1) ein Geberelement (3) aufweist, das mit einer für ein zugeordnetes Sensorelement lesbaren Kodierung versehen ist und das von einer Trägerhülse (4) getragen ist, , **gekennzeichnet, durch** folgende Schritte:
- Bereitstellen der Trägerhülse (4) aus einem thermoplastischen Kunststoff,
- Positionieren der Trägerhülse (4) auf der Welle (5) derart, dass ein umformbarer Bereich (13) radial und axial einer Ausnehmung (8) der Welle (5) benachbart ist, wobei die Ausnehmung (8) in Axialrichtung und in Umfangsrichtung der Welle (5) begrenzt ist,
- Umformen der Trägerhülse (4) durch eine Ultraschall-Sonotrode (9), die den Bereich gleichzeitig durch Ultraschall erhitzt und das Material der Trägerhülse (4) in die Ausnehmung (8) der Welle (5) eindrückt.

9. Verfahren nach Anspruch 8, **dadurch gekennzeichnet, dass** die Sonotrode (9) eine Ultraschallfrequenz aufweist zur Erweichung des Materials und gegen die Trägerhülse 4 gedrückt wird.

10. Verfahren nach Anspruch 8 oder 9, **dadurch gekennzeichnet, dass** das thermoplastische Material nach dem Abschalten der Sonotrode (9) aushärtet.

11. Verwendung einer Ultraschall-Sonotrode zur Fertigung einer Sensoranordnung mit einem drehfest auf einer um eine Längsachse drehbaren Welle (5) befestigten Geber (1), wobei der Geber (1) ein Geberelement (3) aufweist, das mit einer für ein zugeordnetes Sensorelement lesbaren Kodierung versehen ist und das von einer Trägerhülse (4) getragen ist,
**dadurch gekennzeichnet, dass** die Trägerhülse (4) aus einem thermoplastischen Kunststoff gefertigt ist und in einem Bereich (13) zur Montage an der Welle (5) mittels Ultraschallumformung durch die Sonotrode in eine Ausnehmung (8) der Welle (5) eingeformt wird, wobei die Ausnehmung (8) in Axialrichtung und in Umfangsrichtung der Welle (5) begrenzt ist.

## Claims

1. Sensor arrangement having a transmitter (1) attached in a torque proof manner to a shaft (5) which is rotatable about a longitudinal axis, wherein the transmitter (1) has a transmitter element (3), which is provided with a coding which can be read by an assigned sensor element, and which transmitter element (3) is held by a support sleeve (4), **characterised in that** the support sleeve (4) is produced from a thermoplastic synthetic material, and **in that** one area (13) for mounting on the shaft (5) comprises an area deformed by an ultrasonic sonotrode and is formed into a recess (8) of the shaft (5), wherein the recess (8) is delimited in the axial direction and in the circumferential direction of the shaft (5) and the deformed area is deformed by heat and pressure.

2. Sensor arrangement according to Claim 1, **characterised in that** the support sleeve (4) has an inner contour having at least three ridges (12) which are distributed over the circumference and abut on the shaft (5).

3. Sensor arrangement according to Claim 2, **characterised in that** the inner contour consists of three ridges which run parallel to the longitudinal axis of the shaft (5) and which are distributed at an angular distance over the inner circumference (11) of the support sleeve (4).

4. Sensor arrangement according to Claim 2 or 3, **characterised in that** the ridges (12) abut with pretensioning on the outer surface of the support sleeve (4).

5. Sensor arrangement according to any one of the preceding claims, **characterised in that** the support sleeve (4) has an attachment point (13) which is prepared for the deformation by means of an ultrasonic sonotrode (9).

6. Sensor arrangement according to Claim 5, **characterised in that** the attachment point (13) is arranged between two ridges (12) of the inner contour.

7. Sensor arrangement according to any one of the preceding claims, **characterised in that** the transmitter element (3) has the geometrical shape of a disc with an inner annular collar (7).

8. Method for producing a sensor arrangement having a transmitter (1) attached in a torque proof manner to a shaft (5) which is rotatable about a longitudinal axis, wherein the transmitter (1) has a transmitter element (3), which is provided with a coding which can be read by an assigned sensor element, and which transmitter element (3) is held by a support sleeve (4), **characterised by** the following steps:
- providing the support sleeve (4) consisting of a thermoplastic synthetic material,
- positioning the support sleeve (4) on the shaft (5) in such a way that a deformable area (13) is radially and axially adjacent to a recess (8) of the shaft (5), wherein the recess (8) is delimited in the axial direction and in the circumferential direction of the shaft (5),
- deforming the support sleeve (4) by means of an ultrasonic sonotrode (9) which heats the area by ultrasound and presses the material of the support sleeve (4) into the recess (8) of the shaft (5) at the same time.

9. Method according to Claim 8, **characterised in that** the sonotrode (9) has an ultrasonic frequency for softening the material and is pressed against the support sleeve (4).

10. Method according to Claim 8 or 9, **characterised in that** the thermoplastic synthetic material hardens after the sonotrode (9) is switched off.

11. Use of an ultrasonic sonotrode for producing a sensor arrangement having a transmitter (1) attached in a torque proof manner to a shaft (5) which is rotatable about a longitudinal axis, wherein the transmitter (1) has a transmitter element (3), which is provided with a coding which can be read by an assigned sensor element, and which transmitter element (3) is held by a support sleeve (4), **characterised in that** the support sleeve (4) is produced from a thermoplastic synthetic material and in one area (13) for mounting on the shaft (5) is formed into a recess (8) of the shaft (5) by means of ultrasonic deformation by the sonotrode, wherein the recess (8) is delimited in the axial direction and in the circumferential direction of the shaft (5).

## Revendications

1. Ensemble détecteur comprenant un capteur (1) fixé de manière rotative à un arbre tournant (5) autour d'un axe longitudinal, le capteur (1) présentant un élément capteur (3) qui est pourvu d'un codage lisible pour un élément détecteur associé et qui est porté par une douille de support (4), **caractérisé en ce que** la douille de support (4) est réalisée en une matière thermoplastique et **en ce que**, aux fins de montage sur l'arbre (5), une zone (13) présente une zone déformée par une sonotrode à ultrasons et est moulée dans un évidement (8) de l'arbre (5), l'évidement (8) étant limité en direction axiale et en direction circonférentielle de l'arbre (5) et la zone déformée étant déformée sous l'action de la chaleur et de la press ion.

2. Ensemble détecteur selon la revendication 1, **caractérisé en ce que** la douille de support (4) présente un contour intérieur avec au moins trois passerelles (12) reparties sur la périphérie qui sont en appui contre l'arbre (5).

3. Ensemble détecteur selon la revendication 2, **caractérisé en ce que** le contour intérieur est conçu à partir de trois passerelles passant parallèlement par rapport à l'axe longitudinal de l'arbre (5) qui sont reparties dans un écartement angulaire sur la périphérie intérieure (11) de la douille de support (4).

4. Ensemble détecteur selon la revendication 2 ou 3, **caractérisé en ce que** les passerelles (12) sont en appui par précontrainte contre la surface supérieure extérieure de la douille de support (4).

5. Ensemble détecteur selon l'une des revendications précédentes, **caractérisé en ce que** la douille de support (4) présente un point de fixation (13) qui est préparé pour la déformation à l'aide d'une sonotrode à ultrasons (9).

6. Ensemble détecteur selon la revendication 5, **caractérisé en ce que** le point de fixation (13) est agencé entre deux passerelles (12) du contour intérieur.

7. Ensemble détecteur selon l'une des revendications précédentes, **caractérisé en ce que** l'élément capteur (3) présente la forme géométrique d'un disque avec une collerette annulaire (7) située à l'intérieur.

8. Procédé de fabrication d'un ensemble détecteur comprenant un capteur (1) fixé de manière rotative à un arbre (5) tournant autour d'un axe longitudinal, le capteur (1) présentant un élément capteur (3) qui est pourvu d'un codage lisible pour un élément détecteur associé et qui est porté par une douille de support (4), **caractérisé par** les étapes suivantes :
• mise à disposition de la douille de support (4) en une matière thermoplastique,
• positionnement de la douille de support (4) sur l'arbre (5) de telle façon qu'une zone (13) pouvant être déformée est adjacente radialement et axialement à un évidement (8) de l'arbre (5), l'évidement (8) étant limité en direction axiale et en direction circonférentielle de l'arbre (5),
• déformation de la douille de support (4) à l'aide d'une sonotrode à ultrasons (9) qui réchauffe simultanément la zone à l'aide d'ultrasons et pousse la matière de la douille de support (4) dans l'évidement (8) de l'arbre (5).

9. Procédé selon la revendication 8, **caractérisé en ce que** la sonotrode (9) présente une fréquence ultrasonique pour le ramollissement de la matière et est comprimée contre la douille de support (4).

10. Procédé selon la revendication 8 ou 9, **caractérisé en ce que** la matière thermoplastique se durcit après la mise hors service de la sonotrode (9).

11. Utilisation d'une sonotrode à ultrasons pour la fabrication d'un ensemble détecteur comprenant un capteur (1) fixé de manière rotative à un arbre (5) tournant autour d'un axe longitudinal, le capteur (1) présentant un élément capteur (3) qui est pourvu d'un codage lisible pour un élément détecteur associé et qui est porté par une douille de support (4), **caractérisé en ce que** la douille de support (4) est réalisée en une matière thermoplastique et **en ce que**, aux fins de montage sur l'arbre (5), une zone (13) est moulée dans un évidement (8) de l'arbre (5) par déformation par ultrasons, l'évidement (8) étant limité en direction axiale et en direction circonférentielle de l'arbre (5).
